# EUROPÄISCHE PATENTANMELDUNG

(11) **EP 2 383 729 A2**
(43) Veröffentlichungstag der Anmeldung: **02.11.2011**
(21) Anmeldenummer: 11003307.3
(22) Anmeldetag: 20.04.2011
(51) Int. Cl.: G10K 1/28, B23K 20/12

(54) **Verfahren zur Reparatur einer Glocke**

(30) Priorität: 30.04.2010 DE 102010019120
(71) Anmelder: Gottfried Wilhelm Leibniz Universität Hannover, 30167 Hannover (DE)
(72) Erfinder: Bach, Friedrich-Wilhelm, 30916 Isernhagen (DE); Hassel, Thomas, 30161 Hannover (DE); Dr. Ing. Pietsch, Norbert, 04416 Karkkleeberg (DE); Prof. Dr. Nietzold, Andreas, 01187 Dresden (DE); Kühne, Ulrich, 01157 Dresden (DE)
(74) Vertreter: Günther, Constantin

(57) **Zusammenfassung**

Die Erfindung betrifft ein Verfahren zur Reparatur einer Glocke (1), bei dem ein mit der Glockenkrone (2) verbundener Teil (6) der Glockenplatte (3) zunächst aus der Glockenplatte (3) herausgetrennt wird und ein Reparaturteil (10, 11, 20, 30, 31) dafür in die Glockenplatte (3) eingesetzt wird, wobei das Reparaturteil (10, 11, 20, 30, 31) mit einem Kaltverbindungsverfahren an der Glockenplatte (3) befestigt wird

## Beschreibung

Die Erfindung betrifft ein Verfahren zur Reparatur einer Glocke gemäß dem Oberbegriff des Anspruchs 1. Die Erfindung betrifft ferner eine derart reparierte Glocke sowie ein Reparaturteil, ein Oberteil des Reparaturteils und ein Konterelement für eine Reparatur einer Glocke.

Allein in Deutschland gibt es mehr als 30.000 Kirchen. Jede dieser Kirchen ist mit wenigstens einer Kirchenglocke ausgestattet. Die Glocken unterliegen einer Materialalterung. In Deutschland existieren zurzeit ca. 400 Fälle von akuten Glockenkronenbrüchen. Solche Glocken dürfen aufgrund sicherheitsrelevanter Aspekte nicht mehr geläutet werden und werden stillgelegt, wie z.B. die Johannesglocke im Dom zu Meißen. Eine Vielzahl solcher Kirchenglocken ist Ende des 19. bzw. Anfang des 20. Jahrhunderts hergestellt worden und nunmehr ca. 100 Jahre alt. Im Zuge der Benutzung und der Jahre unterlagen diese Glocken mechanischen, korrosionsbedingten und damit werkstoffbedingten Belastungen. Insbesondere der Bereich der Glockenkrone ist durch die dort auftretenden mechanischen und dynamischen Belastungen diejenige Stelle der Glocke, die am stärksten und vielseitigsten belastet wird. Beim Läuten der Glocke schlägt der Klöppel gegen die Glockeninnenseite der Glockenflanke. Im Bereich der Glockenkrone überlagern sich die durch das Läuten erzeugten Schwingungen mit den durch den dynamischen Läutvorgang verursachten Scher- und Normalkräften. Hinzukommen verschiedenartige Lagerungsmöglichkeiten der Glocken mit der Konsequenz, dass der Drehmittelpunkt nicht immer außerhalb der eigentlichen Glocke liegt. So drehen sich z.B. mit starrem Joch gelagerte Glocken mitunter um den Glockenschwerpunkt, was noch größere Belastungen der Glockenkrone zur Folge hat.

Es besteht somit ein Bedarf an Reparaturmöglichkeiten für solche Glocken. Übliche Reparaturverfahren basieren auf der Schweißtechnik. So werden beispielsweise bisher Risse in den Glockenflanken, die durch das Aufschlagen des Klöppels gegen die Glockeninnenseiten der Glockenflanken entstehen, durch Schweißtechnik repariert. Aus der Patentschrift DE 891 348 ist z.B. ein Verfahren zum Erneuern von ausgeschlagenen Glocken mittels Aufschweißen, Aufschmelzen oder Aufspritzen von Metall beschrieben. Die FR 2 703 615 beschreibt ein Verfahren zum Schweißen von Glocken oberhalb einer Temperatur von 600°C. Die CN 101549425 beschreibt ein Verfahren zum Schweißen von defekten Glocken.

Sämtliche bekannte Verfahren haben den Nachteil, dass ein Transport der Glocke aus dem Glockenstuhl in eine Werkstatt erforderlich ist. Die notwendigen Schweißarbeiten dürfen nämlich nicht in den Glockenstühlen vorgenommen werden. Die bekannten Verfahren erfordern außerdem eine vollständige Erwärmung der Glocke zur Vermeidung von Heißrissbildung, was ebenfalls nicht im Glockenstuhl möglich ist. Ein solcher Ausbau und Transport der Glocke aus dem Glockenstuhl ist aufwendig und in der Regel mit Baumaßnahmen verbunden.

Der Erfindung liegt daher die Aufgabe zugrunde, Möglichkeiten zur Reparatur einer Glocke anzugeben, die mit verringertem Aufwand durchführbar sind.

Diese Aufgabe wird durch die in den Ansprüchen 1, 7, 8, 9 und 10 angegebene Erfindung gelöst. Die Unteransprüche geben vorteilhafte Weiterbildungen der Erfindung an.

Gemäß der Erfindung wird vorgeschlagen, ein Teil aus der Glockenplatte herauszutrennen und ein Reparaturteil dafür in die Glockenplatte einzusetzen. Das Reparaturteil wird mit einem Kaltverbindungsverfahren an der Glockenplatte befestigt. Dies erlaubt es, die komplette Reparatur der Glocke in einem Glockenstuhl durchzuführen. Die Glocke muss daher nicht mehr mit großem Aufwand in eine Werkstatt transportiert werden. Dies hat den weiteren Vorteil, dass keine Veränderungen an denkmalgeschützten Gebäuden im Bereich des Glockenstuhls erforderlich sind, wie z.B. das Aufbrechen von Wänden, damit die im Glockenstuhl befindliche Glocke heraustransportiert werden kann. Auch können die durch den Denkmalschutz festgelegten Beschränkungen mit verringertem Aufwand eingehalten werden.

Die Verwendung eines Kaltverbindungsverfahrens hat den weiteren Vorteil, dass hierdurch auch keine thermische Beeinflussung der Glocke entsteht. Mit der Erfindung kann somit eine Glocke klanglich und optisch vollständig in ihrem ursprünglichen Zustand versetzt werden. Ein weiterer Vorteil von Kaltverbindungsverfahren ist, dass die Verbindung zwischen den Bauteilen unterhalb ihrer Schmelztemperatur erfolgen kann. Dies umfasst unter anderem auch stoffschlüssige Kaltverbindungsverfahren. Insofern umfasst der Begriff Kaltverbindungsverfahren auch solche Verfahren, die mit einer gewissen, allerdings im Vergleich zum Schweißen geringen, Erwärmung verbunden sind.

Die Erfindung hat den Vorteil, dass die Reparatur der Glocke mit erheblich reduziertem Zeit- und Kostenaufwand durchgeführt werden kann. Musste man bei bekannten Verfahren von einer Reparaturdauer von einem halben bis einem ganzen Jahr rechnen, so ist unter Anwendung der Erfindung nunmehr eine Reparatur einer mittelschweren Glocke von etwa sieben Tonnen Gewicht in nur ca. 2 Wochen möglich. Dementsprechend verkürzen sich die Stilllegungszeiten für die Glocke. Insbesondere bei sehr schweren Glocken, deren Gewicht bis zu 25 Tonnen reichen kann, ergeben sich umfangreiche Vorteile gegenüber bekannten Verfahren der Glockenreparatur.

Als Kaltverbindungsverfahren kommen grundsätzlich alle gängigen Verfahren dieser Art in Frage, sei es durch Formschluss, Kraftschluss oder Stoffschluss. Auch Kombinationen aus diesen Verbindungsmöglichkeiten sind vorteilhaft.

Als Kaltverbindungsverfahren sind z.B. lösbare Verbindungen vorteilhaft. Aber auch Reibschweißverbindungen sind vorteilhaft einsetzbar. Als lösbare Verbindungen können z.B. Gewindeverbindungen bzw. Verschraubungen vorgesehen sein. So kann beispielsweise das Reparaturteil mit einem Außengewinde versehen werden und der in der Glockenplatte vorgesehene Ausschnitt mit einem Innengewinde, so dass das Reparaturteil in die Glockenplatte hineingeschraubt werden kann. Vorteilhaft kann auch das Reparaturteil mit separaten Schrauben an der Glockenplatte angeschraubt werden. Ein Vorteil der Verwendung lösbarer Kaltverbindungsverfahren ist, dass nach einmaliger Durchführung des erfindungsgemäßen Verfahrens eine spätere erneute Reparatur erheblich vereinfacht wird, da der Materialtrennvorgang entfällt. Vorteilhaft können auch regelmäßige Inspektionen der besonders belasteten Teile der Glocke vorgenommen werden, indem diese turnusmäßig ausgebaut werden und z.B. einer Röntgenkontrolle unterzogen werden, um frühzeitig Risse oder Lunker zu entdecken. Hierdurch kann die Sicherheit beim Betrieb der Glocke verbessert werden.

Das aus der Glockenplatte herausgetrennte Teil umfasst somit zunächst die Glockenkrone. Im Laufe der Reparatur kann beispielsweise die Glockenkrone von dem herausgetrennten Teil abgetrennt werden und separat repariert oder ersetzt werden.

Gemäß einer vorteilhaften Weiterbildung der Erfindung ist vorgesehen, dass beim Verfahren zur Reparatur einer Glocke folgende Schritte nacheinander, ggf. mit weiteren Zwischenschritten, ausgeführt werden:
a) Abhängen der Glocke im Glockenstuhl,
b) Heraustrennen wenigstens eines mit der Glockenkrone verbundenen Teils der Glockenplatte aus der Glockenplatte bei im Glockenstuhl befindlicher Glocke,
c) Befestigen des Reparaturteils an der Glockenplatte bei im Glockenstuhl befindlicher Glocke,
d) Wiederaufhängen der Glocke im Glockenstuhl.

Wie erkennbar ist, kann hierdurch der Aufwand für die Reparatur einer Glocke gering gehalten werden, da sämtliche Arbeiten im Glockenstuhl ausgeführt werden können und auf das notwendige Maß begrenzt sind. Vor dem Schritt b) ist gegebenenfalls der Klöppel der Glocke zu entfernen.

Gemäß einer vorteilhaften Weiterbildung der Erfindung wird zwischen dem Schritt b) und dem Schritt c) ein Schritt des Beschaffens des Reparaturteils durchgeführt. Gemäß einer vorteilhaften Weiterbildung der Erfindung weist dieser Schritt ein Reparieren des aus der Glocke herausgetrennten Teils und/oder die Herstellung eines gleichwertigen Ersatzteils auf. Vorteilhaft kann auch eine Kombination beider Maßnahmen durchgeführt werden, wie z.B. das Abtrennen der Glockenkrone von dem herausgetrennten Teil, ein Reparieren der Glockenkrone mit bekannter Schweißtechnik und die Herstellung eines Ersatzteils für ein Einsatzteil in dem Ausschnitt der Glockenplatte, das dann, z.B. mit einer Verschraubung, mit der reparierten Glockenkrone verbunden wird.

Gemäß einer vorteilhaften Weiterbildung der Erfindung weist das Reparaturteil ein Konterelement auf. Das Konterelement wird in Einbaulage der Glocke von der Unterseite der Glockenplatte an die Glockenplatte geführt und mit der Glockenplatte verbunden. Zusammen mit einem von der Oberseite der Glockenplatte herangeführten Oberteil des Reparaturteils kann die Glockenplatte hiermit z.B. formschlüssig zwischen dem Oberteil und dem Konterelement eingespannt werden. Dies erlaubt eine besonders haltbare Befestigung des Reparaturteils an der Glockenplatte.

Grundsätzlich kann der in die Glockenplatte geschnittene Ausschnitt beim Heraustrennen des Teils aus der Glockenplatte eine beliebige Form haben, z.B. zylinderförmig sein. Gemäß einer vorteilhaften Weiterbildung der Erfindung wird in die Glockenplatte ein sich verjüngender Ausschnitt geschnitten. Der sich verjüngende Ausschnitt kann insbesondere ein kegelstumpfförmiger Ausschnitt sein. Das Schneiden kegelstumpfförmiger Ausschnitte erlaubt in einigen Fällen eine vereinfachte Führung des Trennwerkzeugs. Vorteilhaft kann der sich verjüngende Ausschnitt in Richtung zur Glockenkrone hin verjüngend ausgebildet sein.

Gemäß einer vorteilhaften Weiterbildung der Erfindung wird auf der Oberseite der Glockenplatte und der Unterseite der Glockenplatte jeweils ein sich verjüngender, insbesondere ein kegelstumpfförmiger, Ausschnitt geschnitten. Die jeweils kleineren Endflächen der Ausschnitte sind einander zugewandt. Dies erlaubt vorteilhaft ein formschlüssiges Einspannen der Glockenplatte im Bereich des Ausschnitts zwischen dem Oberteil des Reparaturteils und dem Konterelement.

Gemäß einer vorteilhaften Weiterbildung der Erfindung wird vor der Reparatur der Glocke eine zerstörungsfreie Analyse der Glocke durchgeführt. Die Analyse kann insbesondere eine dynamische und statische Belastungsanalyse beinhalten. Vorteilhaft erfolgt hierbei eine statische Berechnung auftretender Flächenlasten im Bereich des Ausschnitts der Glockenplatte. Hiermit kann sichergestellt werden, dass über die Schnittfläche die erforderliche Last übertragen werden kann. Gemäß einer vorteilhaften Weiterbildung der Erfindung wird die Position und/oder der Winkel des Ausschnitts bzw. der Ausschnitte in der Glockenplatte in Abhängigkeit vom Ergebnis der vorausgegangenen zerstörungsfreien Analyse der Glocke festgelegt.

Gemäß einer vorteilhaften Weiterbildung der Erfindung wird die Glockenkrone mit dem Reparaturteil verbunden, z.B. durch eine Verschraubung, oder einstückig mit dem Reparaturteil ausgebildet. So kann z.B. die Glockenkrone mit dem Reparaturteil insgesamt als Ersatzteil gegossen werden.

Gemäß einer vorteilhaften Weiterbildung der Erfindung wird zum Heraustrennen wenigstens eines mit der Glockenkrone verbundenen Teils der Glockenplatte ein Laufroboter auf der Glockenaußenseite eingesetzt. Der Laufroboter führt ein Trennwerkzeug, über das der Trennvorgang erfolgt. Das Trennwerkzeug kann beispielsweise als Schneidwerkzeug ausgeführt sein. Möglich ist auch ein Innendreh- oder Fräsvorgang. Der Einsatz eines Laufroboters hat den Vorteil, dass ein reproduzierbarer kreisrunder Schnitt durchgeführt werden kann. Der Schnitt ist zunächst an der Glockenplatte durchzuführen. Der Schnitt kann durch den Laufroboter später reproduzierbar an einem hergestellten Ersatzteil, das in den Ausschnitt der Glockenplatte eingesetzt werden soll, durchgeführt werden.

Gemäß einer vorteilhaften Weiterbildung der Erfindung wird zum Heraustrennen wenigstens eines mit der Glockenkrone verbundenen Teils der Glockenplatte ein Kalttrennverfahren verwendet. Vorteilhaft kann z.B. das Wasserstrahlschneiden eingesetzt werden. Solche Kalttrennverfahren haben den Vorteil, dass sie ebenfalls vor Ort, d.h. im Glockenstuhl, durchgeführt werden können. Die Verwendung eines Kalttrennverfahrens hat den weiteren Vorteil, dass hierdurch auch keine thermische Beeinflussung der Glocke entsteht.

Gemäß einer vorteilhaften Weiterbildung der Erfindung wird der Schnittwinkel zum Heraustrennen wenigstens eines mit der Glockenkrone verbundenen Teils der Glockenplatte im Bereich von 0° bis 75° bzgl. einer Längsachse der Glocke festgelegt. Dies erlaubt eine günstige Schnittführung bei zugleich stabiler Integration des Reparaturteils in die Glockenplatte.

Das Reparaturteil und/oder das Konterelement können beispielsweise als ebene Platte oder Platte mit einer zylinderförmigen Abstufung ausgebildet sein. Vorteilhaft wird der Ausschnitt in der Glockenplatte mit einem entsprechenden komplementären Profil ausgebildet, so dass das Reparaturteil bzw. das Konterelement darin formschlüssig aufgenommen werden kann.

Gemäß einer vorteilhaften Weiterbildung der Erfindung wird das Konterelement mit wenigstens einem sich verjüngenden Abschnitt ausgebildet. Das Konterelement kann vorteilhaft mit wenigstens einem kegelstumpfförmigen Abschnitt oder insgesamt kegelstumpfförmig ausgebildet sein. Gemäß einer vorteilhaften Weiterbildung kann das Reparaturteil mit wenigstens einem sich verjüngenden Abschnitt ausgebildet sein. Das Reparaturteil kann vorteilhaft mit wenigstens einem kegelstumpfförmigen Abschnitt oder insgesamt kegelstumpfförmig ausgebildet sein.

Gemäß einer vorteilhaften Weiterbildung der Erfindung wird zwischen dem Konterelement und dem Oberteil des Reparaturteils im an der Glocke montierten Zustand ein Spalt gebildet. Hierdurch wird sichergestellt, dass die gesamte Flächenpressung zwischen dem Oberteil, dem Konterelement und den entsprechenden Anlageflächen der Glockenplatte ausschließlich an den entsprechend vorgesehenen Anlageflächen des Konterelements und des Oberteils auftritt. Dies erlaubt eine definierte, kalkulierbare Kraftübertragung zwischen dem Konterelement, dem Oberteil und der Glockenplatte. Hierdurch ist eine definierte Kraftübertragung möglich, mit der insgesamt höhere Kräfte auf die Glockenplatte übertragen werden können, da kein Kraftanteil direkt zwischen dem Konterelement und dem Oberteil des Reparaturteils übertragen wird.

Die Erfindung betrifft ferner eine Glocke, die nach einem der zuvor beschriebenen Verfahren repariert ist. Ferner betrifft die Erfindung ein Reparaturteil zum Einsetzen in einen Ausschnitt der Glockenplatte einer Glocke. Das Reparaturteil weist wenigstens einen sich in Richtung zu der Glockenkrone hin verjüngenden, insbesondere kegelstumpfförmigen, Bereich auf. Ferner betrifft die Erfindung ein Oberteil des Reparaturteils zum Einsetzen in einen Ausschnitt der Glockenplatte einer Glocke. Das Oberteil weist wenigstens einen sich in Richtung von der Glockenkrone fort verjüngenden, insbesondere kegelstumpfförmigen, Bereich auf. Ferner betrifft die Erfindung ein entsprechendes Konterelement zum Einsetzen in einen Ausschnitt der Glockenplatte einer Glocke. Das Konterelement weist wenigstens eine sich in Richtung zur Glockekrone hin verjüngenden, insbesondere kegelstumpfförmigen, Bereich auf.

Die Erfindung wird nachfolgend anhand von Ausführungsbeispielen unter Verwendung von Zeichnungen näher erläutert.

Es zeigen
- Figur 1: - eine Glocke in seitlicher Schnittansicht und
- Figur 2: - eine Glocke in einer Ansicht von oben und
- Figur 3: - eine erste Ausführungsform einer reparierten Glocke und
- Figur 4: - eine zweite Ausführungsform einer reparierten Glocke und
- Figur 5: - eine dritte Ausführungsform einer reparierten Glocke und
- Figur 6: - eine reparierte Glocke in einer Ansicht von oben.

In den Figuren werden gleiche Bezugszeichen für einander entsprechende Elemente verwendet.

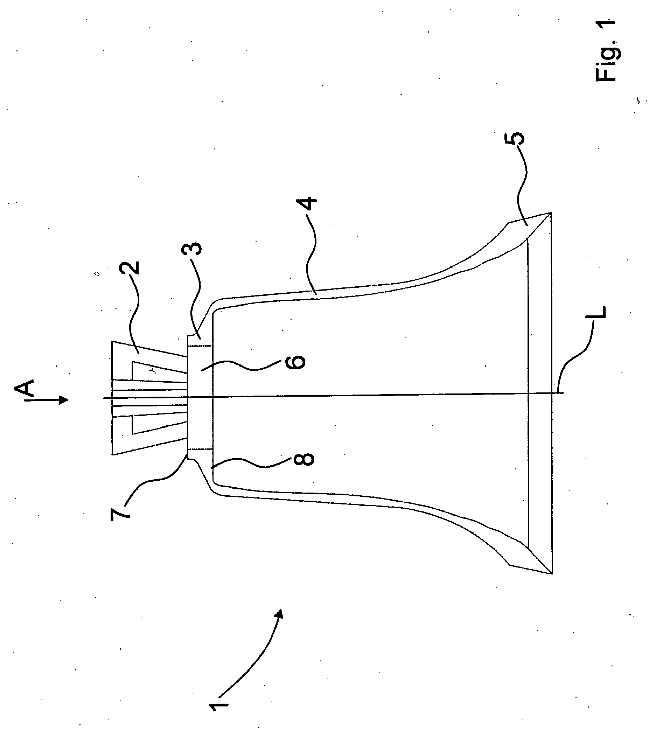

In der Figur 1 ist eine Glocke 1 in seitlicher Schnittansicht dargestellt. Die Glocke 1 weist eine Glockenkrone 2 auf, die zur Aufhängung der Glocke 1 an einer Haltevorrichtung dient. Die Glocke 1 wird beispielsweise mit Seilen, die durch die Glockenkrone 2 geführt werden, aufgehängt. Die Glockenkrone 2 ist mit einer Glockenplatte 3 verbunden, die die darunter liegenden Bereiche der Glocke 1 trägt und die von der Glockenkrone ausgeübten Kräfte überträgt. Unterhalb der Glockenplatte 3 schließt sich der eigentliche Klangkörper der Glocke 1 an. Der Klangkörper weist einen geschweiften Bereich auf, in dem die Flanke 4 der Glocke 1 angeordnet ist. Die Flanke 4 geht zum unteren Ende der Glocke 1 über in einen Schlagring 5, der zum Aufschlag des innerhalb der Flanke 4 beweglich aufgehängten Klöppels dient. Der Klöppel ist in der Figur 1 nicht dargestellt.

Die Glocke 1 weist eine Längsachse L auf. In der Regel sind zumindest die Glockenplatte 3, die Flanke 4 und der Schlagring 5 rotationssymmetrisch zur Längsachse L ausgebildet. Mit gestrichelten Linien ist in der Figur 1 ein Teil 6 der Glockenplatte 3 dargestellt, das im Verlauf der Reparatur aus der Glockenplatte 3 herausgetrennt wird. Das Bezugszeichen 7 bezeichnet die Oberseite der Glockenplatte 3, das Bezugszeichen 8 die Unterseite der Glockenplatte 3, jeweils bezogen auf die normale Einbaulage der Glocke 1.

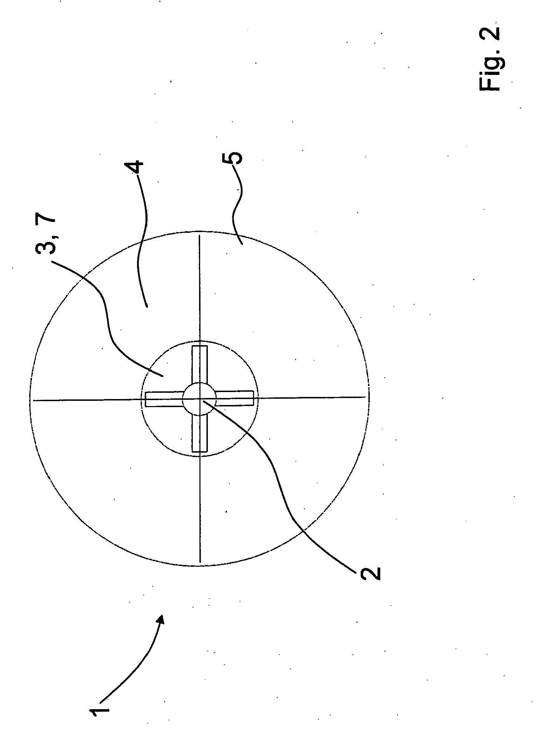

In der Figur 2 ist die Glocke gemäß Figur 1 in der Blickrichtung gemäß Pfeil A, d.h. von oben, dargestellt. Wie erkennbar ist, weist die Glockenkrone 2 im dargestellten Ausführungsbeispiel vier kreuzförmig angeordnete Haltearme auf.

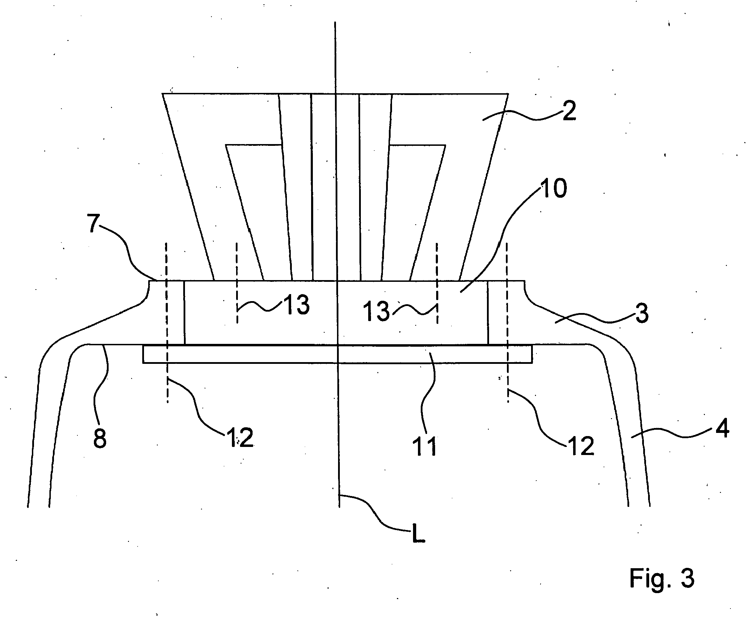

In der Figur 3 ist eine erste Ausführungsform einer reparierten Glocke 1 dargestellt. Zur besseren Erkennbarkeit ist nur der obere Teil der Glocke als vergrößerter Ausschnitt wiedergegeben. Das Reparaturteil wird hier durch ein Oberteil 10 und ein Konterelement 11 gebildet. In dem in der Glockenplatte 3 durch Heraustrennen des Teils 6 gebildeten Ausschnitt ist das Oberteil 10 eingesetzt. Unterhalb des Oberteils 10 ist ein Konterelement 11 angeordnet. Sowohl das Oberteil 10 als auch das Konterelement 11 sind in der Ausführungsform gemäß Figur 3 zylindrisch geformt. Das Konterelement 11 weist einen größeren Durchmesser als das Oberteil 10 auf. Entsprechend liegt die Glockenplatte 3 auf dem über das Oberteil 10 überstehenden Bereich des Konterelements 11 auf. Das Konterelement 11 kann mit dem Oberteil 10 einstückig ausgebildet sein oder mit diesem verschraubt sein. Das Konterelement 11 ist mit einer Mehrzahl von Schrauben, die durch gestrichelte Linien 12 symbolisiert werden, mit der Glockenplatte 3 verschraubt. Entsprechend kann die Glockenkrone 2 als separates Teil ausgebildet sein und über Schrauben, die durch gestrichelte Linien 13 symbolisiert werden, mit dem Oberteil 10 verschraubt sein. Wie erkennbar ist, erlaubt die Montage mittels der Verschraubungen 12, 13 eine leichte Demontierbarkeit des Reparaturteils 10, 11 und der Glockenkrone 2.

Alternativ zu den Verschraubungen 12 kann auch vorgesehen sein, dass das zylindrische Oberteil 10 mit einem Außengewinde versehen ist. Entsprechend ist die Innenseite des Ausschnitts der Glockenplatte 3 mit einem Innengewinde versehen. In diesem Fall kann das Reparaturteil 10, 11 von der Unterseite 8 her in die Glockenplatte 3 eingeschraubt werden. Möglich ist es auch, beim Vorsehen einer solchen Gewindeverbindung auf das Konterelement 11 zu verzichten.

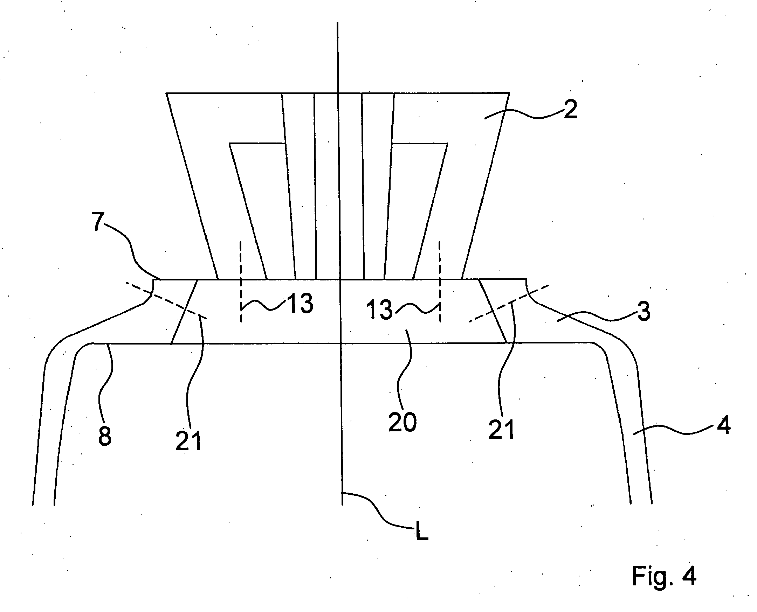

Die Figur 4 zeigt eine zweite Ausführungsform einer reparierten Glocke in einer vergleichbaren Ansicht wie Figur 3. Hierbei wurde ein kegelstumpfförmiger Ausschnitt mit nach oben weisender Verjüngung in der Glockenplatte 3 vorgesehen. Entsprechend wird ein kegelstumpfförmiges Reparaturteil 20 von der Unterseite 8 an die Glockenseite 3 herangeführt und in die Glockenplatte 3 eingesetzt. Das Reparaturteil 20 kann beispielsweise mit Schrauben, die durch gestrichelte Linien 21 symbolisiert sind, mit der Glockenplatte 3 verschraubt werden.

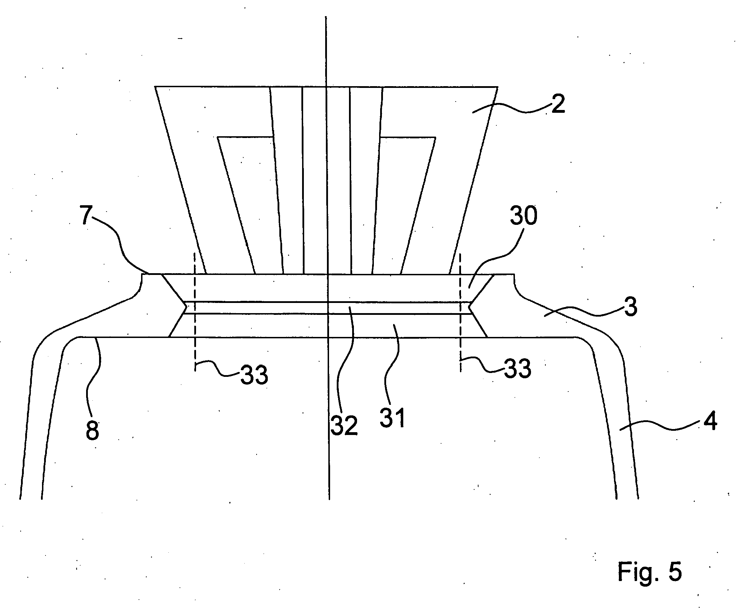

Die Figur 5 zeigt eine dritte Ausführungsform einer reparierten Glocke in einer vergleichbaren Ansicht wie die Figur 3. Gemäß Figur 5 ist ein Ausschnitt in der Glockenkrone 3 vorgesehen, der einen oberen kegelstumpfförmigen Abschnitt und einen unteren kegelstumpfförmigen Abschnitt aufweist, wobei die Kegelstümpfe in Verjüngungsrichtung einander zugewandt sind. Entsprechend sind als formschlüssige Einsatzelemente ein kegelstumpfförmiges Oberteil 30 des Reparaturteils von der Oberseite 7 in den Ausschnitt der Glockenplatte 3 und ein Konterelement 31, das ebenfalls kegelstumpfförmig ist, von der Unterseite 8 in die Glockenplatte 3 eingesetzt. Das Oberteil 30 ist mit dem Konterelement 31 durch eine Verschraubung verbunden. Die Verschraubung wird durch gestrichelte Linien 33 repräsentiert. Das Oberteil 30 und das Konterelement 31 weisen in Summe eine geringere Erstreckung in Längsrichtung der Glocke 1 auf als die Höhe der Glockenplatte 3. Entsprechend wird ein Spalt 32 zwischen dem Oberteil 30 und dem Konterelement 31 gebildet.

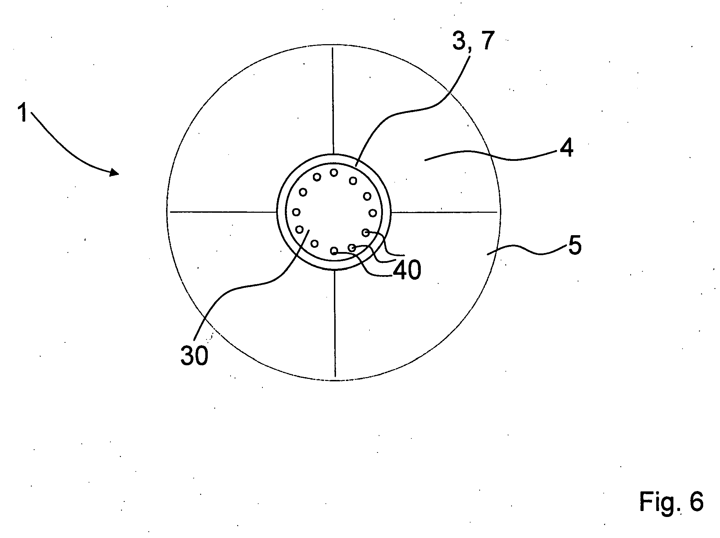

Die Figur 6 zeigt beispielhaft die Anordnung der einzelnen Schrauben in den Schraubverbindungen gemäß den Figuren 3 bis 5. Vorgesehen sind eine Mehrzahl von Schrauben 40, die gleichmäßig über den Umfang des Reparaturteils verteilt sind. Die Schrauben 40 entsprechen beispielsweise der Verschraubung 12 gemäß Figur 3 oder der Verschraubung 33 gemäß Figur 5. Die Verschraubung 21 gemäß Figur 4 ist vergleichbar angeordnet, jedoch mit schräg angebrachten Schraublöchern an der Außenseite der Glockenplatte 3.

Für die Reparatur der Glocke wird zunächst eine zerstörungsfreie Schadensanalyse der Glocke vorgenommen. Es folgt eine dynamische wie statische Belastungsanalyse. Dem Analyseergebnis entsprechend wird die Dimensionierung des einzubauenden Reparaturteils sowie das Einbauverfahren bestimmt. Hierbei wird wenigstens ein runder Schnitt in der Glockenplatte 3 vorgenommen, der mit einem Bohren eines Erstlochs vorbereitet wird. Das Erstloch kann mit einer üblichen Bohrvorrichtung oder auch mit einem Laser hergestellt werden. Für den weitergehenden Schneidprozess wird vorzugsweise an der Glockenaußenseite der Laufroboter befestigt, der das Schneidwerkzeug führt. In einem bestimmten Winkel, der sich aus dem Analyseergebnis ergibt, wird dann vom Erstloch ausgehend in einem Winkel zwischen 15° und 90° von der Glockenplatte ausgehend wenigstens ein z.B. kegelstumpfförmiges Loch in die Glockenplatte geschnitten. Wie zuvor beschrieben, sind auch andere Formgebungen des zu schneidenden Lochs möglich.

Je nach Dimensionierung und Belastungsanalyse können auch mehrere Schnitte vorgenommen werden, so dass in der Schnittansicht Kegelstumpfübergänge entstehen können. Vorteilhaft sind die Schnitte von der Außenseite der Glocke vorzunehmen. Möglich sind auch innerseitige Schnitte. Der herausgetrennte Teil der Glockenplatte ist dann zu sichern und aus dem Arbeitsfeld zu entfernen. Für die Beschaffung des Reparaturteils kann vorteilhaft der aus der Glockenplatte herausgetrennte Teil eingeschmolzen und als Werkstoff für ein Ersatzteil verwendet werden. Das Ersatzteil ist vorteilhaft so zu fertigen, dass es dem Glockenwerkstoff der Glocke 1 entspricht. Das Ersatzteil kann beispielsweise durch Gießen hergestellt werden. Sodann ist es in die entsprechende Form zurechtzuschneiden, so dass es möglichst passgenau in den Ausschnitt der Glockenkrone 3 hineinpasst. Schließlich ist das Reparaturteil mit einem Kaltverbindungsverfahren, wie zuvor erläutert, mit der Glockenplatte 3 zu verbinden.

Für die zuvor beschriebenen Verschraubungen können Gewindestangen oder hochfeste Schrauben verwendet werden. Vorteilhaft werden sämtliche entstandenen Fugen versiegelt, um einen Korrosionsschutz herzustellen.

## Patentansprüche

1. Verfahren zur Reparatur einer Glocke (1), bei dem ein mit der Glockenkrone (2) verbundener Teil (6) der Glockenplatte (3) zunächst aus der Glockenplatte (3) herausgetrennt wird und ein Reparaturteil (10, 11, 20, 30, 31) dafür in die Glockenplatte (3) eingesetzt wird, **dadurch gekennzeichnet, dass** das Reparaturteil (10, 11, 20, 30, 31) mit einem Kaltverbindungsverfahren an der Glockenplatte (3) befestigt wird.

2. Verfahren nach Anspruch 1 mit folgenden, nacheinander ausgeführten Schritten:
a) Abhängen der Glocke (1) im Glockenstuhl,
b) Heraustrennen wenigstens eines mit der Glockenkrone (2) verbundenen Teils (6) der Glockenplatte (3) aus der Glockenplatte (3) bei im Glockenstuhl befindlicher Glocke (1),
c) Befestigen des Reparaturteils (10, 11, 20, 30, 31) an der Glockenplatte (3) bei im Glockenstuhl befindlicher Glocke (1),
d) Wiederaufhängen der Glocke (1) im Glockenstuhl.

3. Verfahren nach Anspruch 2, **dadurch gekennzeichnet, dass** zwischen dem Schritt b) und dem Schritt c) ein Schritt des Beschaffens des Reparaturteils (10, 11, 20, 30, 31) durchgeführt wird.

4. Verfahren nach Anspruch 3, **dadurch gekennzeichnet, dass** der Schritt des Beschaffens des Reparaturteils aufweist:
a) Reparieren des aus der Glocke (1) herausgetrennten Teils (6) und/oder
b) Herstellung eines gleichwertigen Ersatzteils (10, 20, 30).

5. Verfahren nach einem der vorhergehenden Ansprüche, **dadurch gekennzeichnet, dass** einer, mehrere oder alle der folgenden Schritte ausgeführt werden:
a) das Reparaturteil (10, 11, 20, 30, 31) weist ein Konterelement (11, 31) auf, wobei das Konterelement (11, 31) in Einbaulage der Glocke von der Unterseite (8) der Glockenplatte (3) an die Glockenplatte (3) geführt und mit der Glockenplatte (3) verbunden wird,
b) das Reparaturteil (10, 11, 20, 30, 31) wird durch Verschrauben an der Glockenplatte (3) befestigt,
c) das Reparaturteil (10, 11, 20, 30, 31) wird durch Reibschweißen an der Glockenplatte (3) befestigt,
d) in die Glockenplatte (3) wird ein zylindrischer oder ein sich verjüngender, insbesondere kegelstumpfförmiger, Ausschnitt geschnitten,
e) auf der Oberseite (7) der Glockenplatte (3) und der Unterseite (8) der Glockenplatte (3) wird jeweils ein sich verjüngender, insbesondere kegelstumpfförmiger, Ausschnitt geschnitten, wobei die jeweils kleineren Endflächen der Ausschnitte einander zugewandt sind,
f) die Position und/oder der Winkel des Ausschnitts bzw. der Ausschnitte wird in Abhängigkeit vom Ergebnis einer vorausgegangenen zerstörungsfreien Analyse der Glocke (1) festgelegt,
g) die Glockenkrone (2) wird mit dem Reparaturteil (10, 11, 20, 30, 31) verbunden oder einstückig ausgebildet,
h) zum Heraustrennen wenigstens eines mit der Glockenkrone (2) verbundenen Teils (6) der Glockenplatte (3) wird ein Laufroboter auf der Glockenaußenseite eingesetzt, der ein Trennwerkzeug führt,
i) zum Heraustrennen wenigstens eines mit der Glockenkrone (2) verbundenen Teils (6) der Glockenplatte (3) wird ein Kalttrennverfahren, insbesondere Wasserstrahlschneiden, verwendet.

6. Verfahren nach Anspruch 5, **dadurch gekennzeichnet, dass** einer, mehrere oder alle der folgenden Schritte ausgeführt werden:
a) der Schnittwinkel zum Heraustrennen wenigstens eines mit der Glockenkrone (2) verbundenen Teils (6) der Glockenplatte (3) wird im Bereich von 0° bis 75° bezüglich einer Längsachse (L) der Glocke (1) festgelegt,
b) das Konterelement (11, 31) wird mit wenigstens einem sich verjüngenden Abschnitt ausgebildet,
c) das Konterelement (11, 31) wird mit wenigstens einem kegelstumpfförmigem Abschnitt oder kegelstumpfförmig ausgebildet,
d) das Reparaturteil (10, 11, 20, 30, 31) wird mit wenigstens einem sich verjüngenden Abschnitt ausgebildet,
e) das Reparaturteil (10, 11, 20, 30, 31) wird mit wenigstens einem kegelstumpfförmigem Abschnitt oder kegelstumpfförmig ausgebildet,
f) zwischen dem Konterelement (11, 31) und einem Oberteil (10, 30) des Reparaturteils (10, 11, 20, 30, 31) wird im an der Glocke (1) montierten Zustand ein Spalt (32) gebildet.

7. Glocke, **gekennzeichnet durch** eine Reparatur nach einem Verfahren nach wenigstens einem der vorhergehenden Ansprüche.

8. Reparaturteil (10, 11, 20, 30, 31) zum Einsetzen in einen Ausschnitt der Glockenplatte (3) einer Glocke (1), **dadurch gekennzeichnet, dass** das Reparaturteil (10, 11, 20, 30, 31) wenigstens einen sich in Richtung zur Glockenkrone (2) hin verjüngenden, insbesondere kegelstumpfförmigen, Bereich aufweist.

9. Oberteil (10, 30) des Reparaturteils (10, 11, 20, 30, 31) zum Einsetzen in einen Ausschnitt der Glockenplatte (3) einer Glocke (1), **dadurch gekennzeichnet, dass** das Oberteil (10, 30) wenigstens einen sich in Richtung von der Glockenkrone (2) fort verjüngenden, insbesondere kegelstumpfförmigen, Bereich aufweist.

10. Konterelement (11, 31) zum Einsetzen in einen Ausschnitt der Glockenplatte (3) einer Glocke (1), **dadurch gekennzeichnet, dass** das Konterelement (11, 31) wenigstens einen sich in Richtung zur Glockenkrone (2) hin verjüngenden, insbesondere kegelstumpfförmigen, Bereich aufweist.
